# EUROPÄISCHE PATENTSCHRIFT

(11) **EP 3 455 112 B1**
(45) Veröffentlichungstag und Bekanntmachung des Hinweises auf die Patenterteilung: **28.07.2021**
(21) Anmeldenummer: 17723355.8
(22) Anmeldetag: 11.05.2017
(51) Int. Cl.: B60T 13/74, B60T 7/04, B60T 11/18, B60T 11/20

(54) **BREMSGERÄT FÜR EINE HYDRAULISCHE KRAFTFAHRZEUGBREMSANLAGE MIT EINEM KUGELGEWINDETRIEB**
BRAKING DEVICE FOR A HYDRAULIC MOTOR VEHICLE BRAKING SYSTEM HAVING A BALL SCREW DRIVE
DISPOSITIF DE FREINAGE POUR SYSTÈME DE FREINAGE HYDRAULIQUE DE VÉHICULE AUTOMOBILE AVEC VIS À BILLES

(30) Priorität: 13.05.2016 DE 102016208348
(43) Veröffentlichungstag der Anmeldung: 20.03.2019
(73) Patentinhaber: Continental Teves AG & Co. OHG, 60488 Frankfurt am Main (DE)
(72) Erfinder: BACH, Uwe, 65527 Niederseelbach (DE); HOFFMANN, Jens, 64285 Darmstadt (DE); GÄDKE, Martin, 65719 Hofheim/TS. (DE); VON HAYN, Holger, 61118 Bad Vilbel (DE); SEFO, Ahmed, 65931 Frankfurt (DE); MESSNER, Adrian, 64285 Darmstadt (DE); RITTER, Wolfgang, 61440 Oberursel/TS. (DE)
(74) Vertreter: Continental Corporation
(86) Internationale Anmeldenummer: PCT/EP2017/061330
(87) Internationale Veröffentlichungsnummer: WO 2017/194674

(56) Entgegenhaltungen:
- WO-A1-2010/006996
- WO-A1-2010/088920
- WO-A1-2011/026804
- WO-A1-2011/098178
- WO-A1-2012/152352
- WO-A1-2014/095286
- DE-A1-102004 050 103
- DE-A1-102008 039 306
- DE-A1-102014 202 568
- US-A1- 2014 095 044
- US-A1- 2014 202 145

## Beschreibung

Die Erfindung betrifft ein Bremsgerät für eine hydraulische Kraftfahrzeugbremsanlage nach dem Oberbegriff des Anspruchs 1.

Es ist bekannt, für hydraulische Bremsanlagen bei Kraftfahrzeugen Bremsgeräte zu verwenden, die einen Hauptbremszylinder mit einem zur Bremsdruckerzeugung linear verschiebbaren Zylinderkolben und eine auf den Zylinderkolben einwirkende elektromechanische Verstärkerstufe aufweisen. Die Verstärkerstufe wird dabei durch eine Antriebseinheit mit einer rotierenden Antriebswelle angetrieben und verwendet zur Wandlung der rotierenden Bewegung der Antriebswelle in eine translatorische Bewegung einen Kugelgewindetrieb.

Derartige Aggregate haben den Vorteil, dass sie auch unabhängig von dem Fahrer autonom von einer elektronischen Steuereinheit angesteuert werden können. Jedoch muss auch ein direkter Durchgriff durch den Fahrer implementiert werden - die Möglichkeit, die Bremse bei Mangelfunktion oder Ausfall der Verstärkerstufe direkt mit der Betätigungs- beziehungsweise Fusskraft des Fahrers zu betätigen. Dies kann beispielsweise bei Ausfall der elektrischen Energieversorgung oder der Antriebseinheit, jedoch auch bei schnellen Vollbremsungen zur Unterstützung der Verstärkungskraft erforderlich sein. Zugleich wird eine weiche und komfortable haptische Rückmeldung beziehungsweise Reaktionskraft am Bremspedal beim Regelbetrieb verlangt.

Aus DE 10 2008 038 320 A1 ist ein gattungsgemäßes Bremsgerät mit einem Kugelgewindetrieb bekannt. Die Verstärkungskraft wird hier von einer hohlgebohrten Spindel (Hohlspindel) des Kugelgewindetriebs in den Zylinderkolben eingeleitet. Der direkte Durchgriff erfolgt mittels einer durch die Hohlspindel verlaufenden besonders langen Kolbenstange, mit der der Fahrer unabhängig von der Spindel auf den Zylinderkolben einwirken kann. Zwischen der Kolbenstange und der Spindel einerseits und dem Zylinderkolben andererseits ist ein elastisches Reaktionselement angeordnet, der für die Reaktionskraft und somit die haptische Rückmeldung am Pedal sorgt.

Aus WO 2010/088920 A1 ist ein Bremsgerät mit einem elektromechanischen Bremskraftverstärker bekannt bei dem im Kraftfluß zwischen der Spindel und einer mit dem Bremspedal verbundenen Pedalstößel ein Leerhub vorgesehen ist welcher durch ein Federelement überbrückt ist, wodurch Stöße gemindert werden. Als Nachteil wird angesehen, dass der Aufbau der Verstärkerstufe insgesamt komplex und die Herstellung aufwendig ist. Für eine ausreichende Steifigkeit muss die Kolbenstange mit einem relativ großen Außendurchmesser ausgebildet werden, wodurch die Hohlspindel und sämtliche anderen koaxial angeordneten Komponenten und folglich das Gewicht und die Außenmaße vergrößert sind. Zudem ist die Herstellung einer Hohlspindel sehr kostenintensiv.

Es stellt sich somit eine Aufgabe, ein verbessertes Bremsgerät der eingangs genannten Gattung anzubieten, der unter Vermeidung der vorgenannten Nachteile möglichst kompakt, gewicht- und bauraumsparend aufgebaut ist, bei Ausfall der Verstärkerstufe dennoch einen effektiven direkten Durchgriff auf den Zylinderkolben und bei Regelbetrieb eine komfortable haptische Rückmeldung am Pedal ermöglicht.

Die Aufgabe wird erfindungsgemäß durch ein Bremsgerät mit Merkmalskombination nach Anspruch 1 gelöst. Unteransprüche geben weitere vorteilhafte Ausführungen und Weiterbildungen der Erfindung an.

Die Erfindung sieht vor, dass der Kugelgewindetrieb einen Außentopf mit einer Außenverzahnung aufweist, welcher über die Außenverzahnung durch die Antriebseinheit - beispielsweise mittels eines Riementriebs oder Zahnradgetriebes - in Rotation versetzt wird und die Kugelgewindemutter in dem Außentopf verdrehgesichert sowie linear verschiebbar geführt ist, indem die Kugelgewindemutter eine nichtrunde Außenkontur aufweist, die mit einer zumindest bereichsweise korrespondierenden Innenkontur des Außentopfs kooperiert.

Damit ist ein direkter Durchgriff durch den Fahrer jederzeit und unabhängig von der Antriebsmechanik möglich.

Durch die Reihen- statt Parallelschaltung der Verstärkungskraft und der Betätigungskraft entfällt die Notwendigkeit einer kostenintensiven Hohlspindel, es kann eine günstigere und leichtere Vollspindel mit einem geringeren Außendurchmesser verwendet werden. Die Radiale Ausdehnung und das Gewicht der gesamten Verstärkerstufe werden signifikant reduziert.

Zudem kann die Reaktionskraft konstruktiv sehr einfach, lediglich durch Anpassung der Eigenschaften des Federelements z.B. Tellerfederpakets, Gummischeibe etc. entsprechend den Kundenvorgaben eingestellt und beispielsweise an die gewohnte, komfortable Pedalkennlinie eines pneumatischen Bremskraftverstärkers angeglichen werden. Die Grundkennlinie des Bremsgeräts lässt sich zudem zusätzlich softwaremäßig durch intelligente Ansteuerung der Antriebseinheit verändern, sodass diese je nach Fahrerwunsch, individuell eingestellt werden kann, wodurch eine nahezu beliebige gewünschte haptische Rückmeldung am Bremspedal realisierbar ist und der Pedalleerweg zugleich kurz gehalten werden kann.

In einer Weiterbildung sieht die Erfindung vor,
In einer Weiterbildung der Erfindung ist das Federelement in einem Federelementgehäuse angeordnet, welches im Verstärkergehäuse linear verschiebbar gelagert ist. Anhand einer besonders bevorzugten Weiterbildung ist das Federelementgehäuse durch eine, zumindest in axiale Richtung kraftübertragenden Verbindung an die Spindel gekoppelt und die Kolbenstange ist relativ zum Federelementgehäuse axial verschiebbar gelagert.

Damit kann zum einen die Verdrehsicherung der Spindel durch das Federelementgehäuse übernommen und die Spindel weiter verkleinert und vereinfacht werden, zum anderen kann die Pedalkennlinie des gleichen Bremsgeräts durch ein einfaches austauschen des Federelements individuell eingestellt werden.

Des Weiteren kann das Federelement anhand einer erfindungsgemäßen Ausführung wenigstens eine Tellerfeder, vorzugsweise einen Tellerfederpaket aufweisen, womit eine kostengünstige, einfach anpassbare und besonders verschleißfeste dauerhafte Lösung ermöglicht wird.

Anhand einer weiteren erfindungsgemäßen Ausführung kann das Federelement ein Elastomerwerkstoff aufweisen oder gänzlich aus diesem gefertigt sein, womit die haptische Rückmeldung durch die eigene interne Dämpfung des Federelements besonders komfortabel wird und durch Änderung der Zusammensetzung des Elastomers sehr fein angepasst werden kann.

Die Erfindung sieht weiter vor, dass in dem Verstärkergehäuse ein Lagergehäuse aus Metall zur Aufnahme von Lagerelementen zur drehbaren Lagerung des Außentopfes angeordnet ist.

Dadurch werden die Lagerungskräfte in dem Lagergehäuse auf eine größere Fläche verteilt, das Verstärkergehäuse kann kostengünstig, gewichtssparend und in einer bedarfsgerecht nahezu beliebig anpassbaren Formenvielfalt aus Kunststoff ausgebildet werden.

Das Lagergehäuse kann zudem besonders kostengünstig aus Blech, beispielsweise durch ein Tiefziehverfahren erzeugt und so das Gewicht und die Herstellkosten des Bremsgeräts weiter gesenkt werden.

Die Erfindung sieht weiter vor, dass eine Sensoreinrichtung mit einem ortsfesten Sensierteil und einem linear verschiebbaren Geberteil zur Erfassung von Position und/oder Bewegung der Kolbenstange vorgesehen ist, wobei das Geberteil mit der Kolbenstange gekoppelt ist.

Damit kann zum einen eine besonders schnelle Erkennung eines Bremswunsches des Fahrers realisiert werden, zum anderen können dadurch, beispielsweise in Verbindung mit einem Drucksensor am Hauptbremszylinder sämtliche steuerungsrelevante Signale direkt am Bremsgerät erfasst werden, ein Eingriff in bremsgerätfremde Komponenten wie beispielsweise Drehwinkelsensor am Bremspedal, ist nicht notwendig, die Installation des Bremsgeräts im Fahrzeug wird ebenfalls vereinfacht.

In einer bevorzugten Weiterbildung sieht die Erfindung vor, dass eine Rückholfeder zum Rückversetzen der Spindel in ihre ungebremste Ausgangsposition zwischen dem Lagergehäuse und dem Federelementgehäuse eingespannt ist, wobei die Rückholfeder sowohl durch Einwirkung der Betätigungskraft als auch der Verstärkungskraft axial vorgespannt wird.

Damit kann auf eine zusätzliche Rückholfeder für die Kolbenstange verzichtet werden, die Komponentenzahl wird reduziert und die Verstärkerstufe kompakt gestaltet.

Weitere Merkmale und Vorteile der Erfindung ergeben sich aus der nachfolgenden Beschreibung eines Ausführungsbeispiels und den Zeichnungen. Hierbei zeigt:

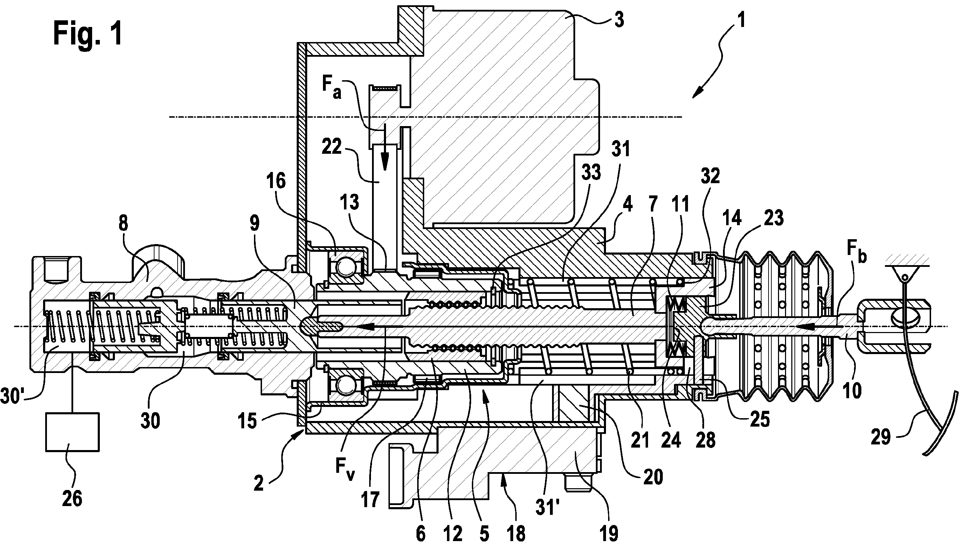

Fig.1 eine erfindungsgemäße Ausführungsform des Bremsgeräts in Längsschnitt in einem unbetätigten Ausgangszustand.
Fig.2 das Bremsgerät gemäß Fig.1 in räumlichen Außenansicht (a) sowie Teilschnittansicht (b).

### Fig.l:

Das erfindungsgemäße Bremsgerät 1 umfasst im Wesentlichen eine von einer elektromotorischen Antriebseinheit 3 angetriebene Verstärkerstufe 2, an die ein Hauptbremszylinder 8 montiert ist.

Im vorliegenden Beispiel ist es ein Tandem Hauptbremszylinder nach Plunger Bauart, obwohl innerhalb der Erfindung auch weitere Hauptbremszylinder-Typen ebenfalls verwendet werden können.

In dem Hauptbremszylinder 8 ist ein Zylinderkolben 9 in axiale Richtung linear verschiebbar gelagert, welcher durch seine Verschiebung in mit Druckmittel gefüllten und Radbremsen verbundenen Druckkammern 30,30' Bremsdruck erzeugt. Ein optional vorliegender Drucksensor 26 registriert den aktuellen Bremsdruck.

Die Verstärkerstufe 2 weist ein, vorzugsweise aus Kunststoff hergestelltes Verstärkergehäuse 4 auf, in dem ein Kugelgewindetrieb 5 angeordnet ist.

Die Antriebseinheit 3 treibt mittels Zahnriemen 22 einen Außentopf 12 an, an dem zu diesem Zweck eine Außenverzahnung 13 angebracht ist. Der Außentopf 12 ist innen hohl gestaltet und wird mittels Lagerelementen 16 und 17 in einem Lagergehäuse 15 in Umfangsrichtung drehbar gelagert. Das Lagergehäuse 15 ist aus Metall, vorzugsweise aus einem dünnwandigen Blech hergestellt und in dem Verstärkergehäuse 4 fixiert.

In dem Außentopf 12 ist eine Kugelgewindemutter 6 linear verschiebbar geführt sowie verdrehgesichert angeordnet. Zur Realisierung der Verdrehsicherung verfügt die Kugelgewindemutter 6 über eine nichtrunde Außenkontur und der Außentopf 12 weist eine damit korrespondierende, komplementäre Innenkontur auf. Auf ihrer dem Hauptbremszylinder 8 gegenüberliegenden Seite stützt sich die Kugelgewindemutter 6 gegen einen axialfesten Anschlag 33 in dem Außentopf 12.

Die Kugelgewindemutter 6 steht gemäß dem Aufbauprinzip eines Kugelgewindetriebs über mehrere Kugeln im Eingriff mit einer Spindel 7. An dem, dem Hauptbremszylinder 8 abgewandten Ende der Spindel 7 ist ein Federelementgehäuse 14 verdrehsicher befestigt. Das Federelementgehäuse 14 ist im Wesentlichen Topfförmig gestaltet und verfügt über vorzugsweise mehrere radiale Vorsprünge 32, die in den axial gestreckten nuten 31, 31' in dem Verstärkergehäuse 4 laufen, wodurch die Spindel 7 in dem Verstärkergehäuse 4 verdrehsicher geführt ist.

Eine Rückholfeder 21 ist zwischen dem Lagergehäuse 15 und dem Federelementgehäuse 14 eingespannt angeordnet. Sie wird bei einer Bremsung durch die Verschiebung der Spindel 7 in Richtung Hauptbremszylinder 8 komprimiert und dient zum Rückversetzen der Spindel 7 in ihre ungebremste Ausgangsposition nach Beendigung der Bremsung.

Zur Ansteuerung des Bremsgerätes 1 durch den Fahrer ist ein Bremspedal 29 vorgesehen, die mit einer linear verschiebbaren Kolbenstange 10 gekoppelt ist, in die die unverstärkte Betätigungskraft Fb eingeleitet wird. An seinem dem Bremspedal 29 abgewandten Ende der Kolbenstange 10 ist ein Übertragungskolben 23 befestigt, der zusammen mit der Kolbenstange 10 bewegt wird.

Der Übertragungskolben 23 ist in dem Federelementgehäuse 14 geführt und relativ zur Spindel 7 axial verschiebbar sowie beabstandet angeordnet. Zwischen dem Übertragungskolben 23 und der Spindel 7 ist ein Federelement 11 positioniert. In der gezeigten Ausführung ist das Federelement 11 als ein Tellerfederpaket gestaltet. In weiteren, nicht gezeigten erfindungsgemäßen Ausführungsformen kann das Federelement auch ein Elastomerwerkstoff enthalten oder vollständig aus diesem ausgebildet sein - beispielsweise scheiben-, ring- oder zylinderförmig. Ebenso ist innerhalb der Erfindung eine Spiralfeder als das Federelement 11 zulässig oder eine Kombination der Vorgenannten. Die Federkraft des Federelements ist vorzugsweise so ausgelegt, dass sie geringer ist, als die in Richtung Kolbenstange 10 wirkende Kraft, die aus Reihenschaltung der Federkraft der Rückholfeder 21 und der Widerstandskraft des Zylinderkolbens 9 ergibt.

Bei der Betätigung des Bremspedals 29 wird so zunächst die Kolbenstange 10 samt Übertragungskolben 23 zur Spindel 7 hin verschoben und das Federelement 11 dabei komprimiert. Der dadurch entstehende, wegabhängig ansteigende Widerstand am Bremspedal 29 wird vom Fahrer als haptische Rückmeldung beziehungsweise Reaktionskraft des Bremsgerätes 1 empfunden. Diese Rückmeldung lässt sich sehr einfach, lediglich durch Veränderung des Federelements 11 - beispielsweise seiner Dimensionen oder seiner Steifigkeit, beeinflussen und an die jeweiligen applikationsspezifischen Anforderungen anpassen.

Der axiale Abstand zwischen dem Übertragungskolben 23 und der Spindel 7 ist vergleichsweise klein, im Bereich weniger Millimeter gewählt und lässt sich ebenso einfach bedarfsgerecht konstruktiv durch Änderung der axialen Ausdehnung des Übertragungskolbens 23 oder der Kolbenstange 10 festlegen.

Damit wird bezweckt, dass im Falle einer Fehlfunktion der Verstärkerstufe 2 oder einer schnellen Vollbremsung der Übertragungskolben 23 nach einem möglichst kurzen Leerweg des Bremspedals 29 mit der Anschlagfläche 24 auf Anschlag mit der Spindel 7 geht und die Betätigungskraft Fb verlustfrei direkt in die Spindel 7 eingeleitet werden kann.

Dadurch werden, je nach Betriebszustand, die Verstärkungskraft Fv mit der Betätigungskraft Fb in der Spindel 7 addiert und zusammen aus der Spindel 7 in den Zylinderkolben 9 eingeleitet, oder die Spindel 7 wird durch die Betätigungskraft Fb zusammen mit der Kugelgewindemutter 6 unabhängig von dem Betriebszustand der Antriebseinheit 3 in dem Außentopf 12 axial verschoben und die Betätigungskraft Fb aus der Spindel 7 in den Zylinderkolben 9 eingeleitet.

Die Betätigung des Bremspedals 29 und die damit einhergehende Verschiebung der Kolbenstange 10 werden durch eine Sensoreinrichtung 18 registriert. Hierfür verfügt die Sensoreinrichtung 18 über ein ortsfest am Verstärkergehäuse 4 angeordnetes Sensierteil 19 und ein bewegliches Geberteil 20. Das Geberteil 20 ist in der gezeigten Ausführung durch ein beispielhaft als Querbolzen ausgeführtes Verbindungselement 25 mit dem Übertragungskolben 23 verbunden. Um die Bewegung des Verbindungselements zu ermöglichen ist im Federelementgehäuse 14 ein Durchbruch 28 vorgesehen. Innerhalb der Erfindung ist es jedoch ebenso vorstellbar, das Geberteil 20 unmittelbar mit der Kolbenstange 10 oder dem Bremspedal 29 zu verbinden. In eienr weiteren nicht gezeigten Ausführungsform ist es ebenso Zulässig, eine Sensoreinrichtung - beispielsweise einen Drehwinkelgeber - am Pedalbock anzubringen.

Die durch die Sensoreinrichtung 18 registrierten Signale werden zur Weiterverarbeitung an eine nicht gezeigte elektronische Steuereinheit weitergeleitet und zur Ansteuerung der Antriebseinheit 3, als auch zur weiteren Verwendung wie beispielsweise Schaltung eines Bremslichts, verwertet.

Ebenso kann das Bremsgerät 1 auch fahrerunabhängig autonom durch eine nicht gezeigte elektronische Steuereinheit angesteuert werden, welche die Antriebseinheit 3 selbsttätig aktiviert.

Bei einem regulären, verstärkten Bremsbetrieb wird durch die Umfangs- beziehungsweise Drehbewegung des Außentopfes 12 zusammen mit der Kugelgewindemutter 6 die Spindel 7 in axiale Richtung linear versetzt. Die Antriebskraft Fa wird durch den Zahnriemen 22 in den Kugelgewindetrieb 5 eingeleitet und die Verstärkungskraft Fv aus der Spindel 7 unmittelbar in den Zylinderkolben 9 übertragen.

Bei einem Fehlerfall wie beispielsweise Ausfall der elektrischen Stromversorgung oder der Antriebseinheit 3, einem Riss des Zahnriemens 22 und dergleichen steht die Verstärkungskraft Fv nicht mehr zur Verfügung und der Zylinderkolben 9 wird somit alleine mit der in die Spindel 7 eingeleiteten unverstärkten Betätigungskraft Fb zum Aufbau des Bremsdrucks verschoben.

### Fig.2:

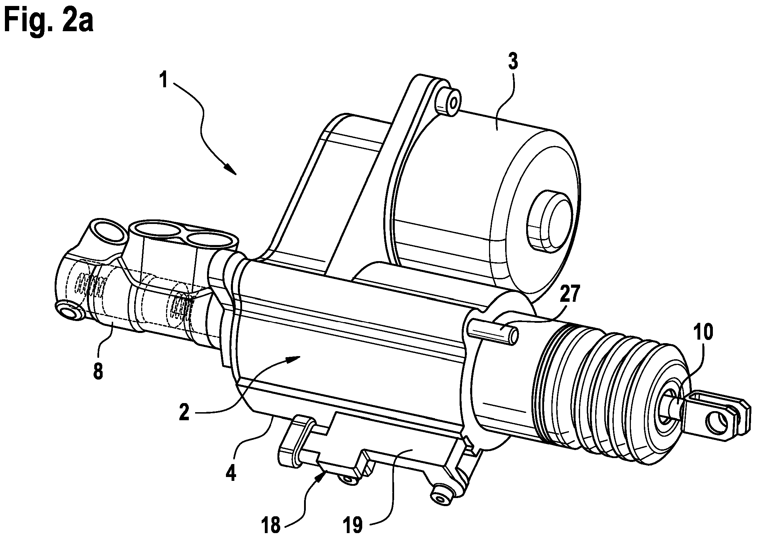

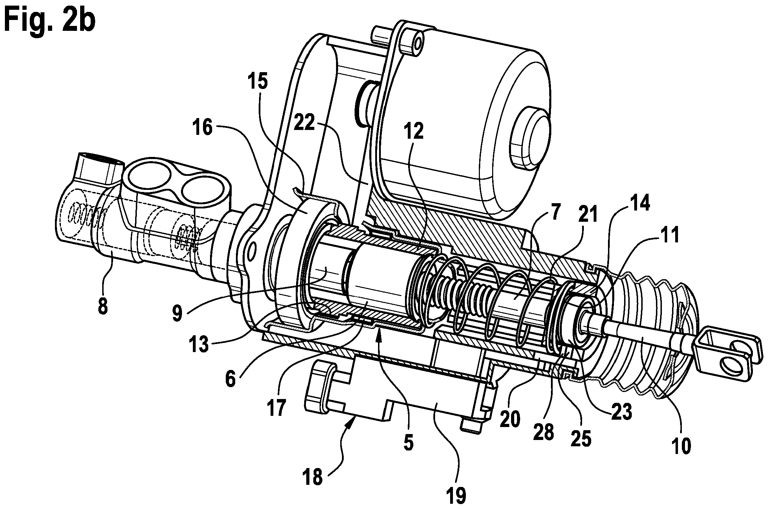

In der Fig.2 ist das Bremsgerät in räumlicher Außenansicht dargestellt. Für eine einfache und effektive Montage des Bremsgeräts 1 am hier nicht gezeigten Fahrzeug werden Montagebolzen 27 nach Zugankerprinzip verwendet, die das Verstärkergehäuse 4 durchgreifen und zugleich zur Befestigung des Hauptbremszylinders 8 der Verstärkerstufe 2 dienen. Dadurch kann das erfindungsgemäße Bremsgerät 1 beispielsweise optional statt eines konventionellen pneumatischen Bremskraftverstärkers unter Ausnutzung der gleichen, bereits vorhandenen Montageschnittstellen eingesetzt werden.

### Bezugszeichen:

- 1: Bremsgerät
- 2: Verstärkerstufe
- 3: Antriebseinheit
- 4: Verstärkergehäuse
- 5: Kugelgewindetrieb
- 6: Kugelgewindemutter
- 7: Spindel
- 8: Hauptbremszylinder
- 9: Zylinderkolben
- 10: Kolbenstange
- 11: Federelement
- 12: Außentopf
- 13: Außenverzahnung
- 14: Federelementgehäuse
- 15: Lagergehäuse
- 16: Lagerelement
- 17: Lagerelement
- 18: Sensoreinrichtung
- 19: Sensierteil
- 20: Geberteil
- 21: Rückholfeder
- 22: Antriebsriemen
- 23: Übertragungskolben
- 24: Anschlagfläche
- 25: Verbindungselement
- 26: Drucksensor
- 27: Montagebolzen
- 28: Durchbruch
- 29: Bremspedal
- 30: Druckkammer
- 31: Nut
- 32: Vorsprung
- 33: Anschlag
- Fa: Antriebskraft
- Fb: Betätigungskraft
- Fv: Verstärkungskraft

## Patentansprüche

1. Bremsgerät (1) für eine hydraulische Kraftfahrzeugbremsanlage, umfassend:
- eine elektromechanische Verstärkerstufe (2), welche von einer elektromotorischen Antriebseinheit (3) angetrieben ist und ein Verstärkergehäuse (4) aufweist, in dem ein Kugelgewindetrieb (5) mit einer rotierbaren Kugelgewindemutter (6) und einer linear versetzbaren Spindel (7) zur Wandlung einer rotatorischen Antriebskraft (Fa) der Antriebseinheit (2) in eine translatorische Verstärkungskraft (Fv) angeordnet ist,
- einen Hauptbremszylinder (8) mit einem darin linear verschiebbaren Zylinderkolben (9), welcher sowohl mit einer unverstärkten Betätigungskraft (Fb) durch den Fahrer, als auch mit der Verstärkungskraft (Fv) durch die Verstärkerstufe (2) beaufschlagbar ist,
- wobei die Betätigungskraft (Fb) aus einer Kolbenstange (10) in die Spindel (7) eingeleitet wird, wobei die Kolbenstange (10) relativ zur Spindel (7) axial begrenzt verschiebbar ist und ein Federelement (11) im Kraftfluß der Betätigungskraft (Fb) zwischen der Kolbenstange (10) und der Spindel (7) geschaltet ist, welches beim Einleiten der Betätigungskraft (Fb) axial komprimiert wird **dadurch gekennzeichnet, dass** das Kugelgewindetrieb (5) einen Außentopf (12) mit einer Außenverzahnung (13) aufweist, welcher über die Außenverzahnung (13) durch die Antriebseinheit (3) in Rotation versetzt wird und die Kugelgewindemutter (6) in dem Außentopf (12) verdrehgesichert sowie linear verschiebbar geführt ist, indem die Kugelgewindemutter (6) eine nichtrunde Außenkontur aufweist, die mit einer zumindest bereichsweise korrespondierenden Innenkontur des Außentopfs (12) kooperiert.

2. Bremsgerät (1) nach Anspruch 1 **dadurch gekennzeichnet, dass** die Federelement (11) in einem Federelementgehäuse (14) angeordnet ist, wobei das Federelementgehäuse (14) im Verstärkergehäuse (4) linear verschiebbar gelagert ist.

3. Bremsgerät (1) nach Anspruch 2 **dadurch gekennzeichnet, dass** das Federelementgehäuse (14) durch eine, zumindest in axiale Richtung kraftübertragenden Verbindung an die Spindel (7) gekoppelt ist und die Kolbenstange (10) relativ zum Federelementgehäuse (14) axial verschiebbar gelagert ist.

4. Bremsgerät (1) nach Anspruch 1 **dadurch gekennzeichnet, dass** das Verstärkergehäuse (4) aus Kunststoff ausgebildet ist.

5. Bremsgerät (1) nach Anspruch 1 **dadurch gekennzeichnet, dass** das Federelement (11) wenigstens eine Tellerfeder aufweist.

6. Bremsgerät (1) nach Anspruch 1 **dadurch gekennzeichnet, dass** das Federelement (11) Elastomerwerkstoff aufweist.

7. Bremsgerät (1) nach Anspruch 1 **dadurch gekennzeichnet, dass** in dem Verstärkergehäuse (4) ein Lagergehäuse (15) aus Metall zur Aufnahme von Lagerelementen (16,17) zur drehbaren Lagerung des Außentopfes (12) angeordnet ist.

8. Bremsgerät (1) nach Anspruch 1 **dadurch gekennzeichnet, dass eine** Sensoreinrichtung (18) mit einem ortsfesten Sensierteil (19) und einem linear verschiebbaren Geberteil (20) zur Erfassung von Position und/oder Bewegung der Kolbenstange (10) vorgesehen ist, wobei das Geberteil (20) mit der Kolbenstange (10) gekoppelt ist.

9. Bremsgerät (1) nach Ansprüchen 2 und 7 **dadurch gekennzeichnet, dass** eine Rückholfeder (21) zum Rückversetzen der Spindel (7) in ihre ungebremste Ausgangsposition zwischen dem Lagergehäuse (15) und dem Federelementgehäuse (14) eingespannt ist, wobei die Rückholfeder (21) sowohl durch Einwirkung der Betätigungskraft (Fb) als auch der Verstärkungskraft (Fv) axial vorgespannt wird.

## Claims

1. Brake unit (1) for a hydraulic motor vehicle brake system, comprising:
- an electromechanical booster stage (2) which is driven by an electric-motor drive unit (3) and has a booster housing (4), in which a ball screw drive (5) with a rotatable ball screw nut (6) and a linearly movable spindle (7) is arranged for the conversion of a rotational drive force (Fa) of the drive unit (2) into a translational boosting force (Fv),
- a brake master cylinder (8) with a cylinder piston (9) which can be displaced in a linear manner therein and can be loaded both with a non-boosted actuating force (Fb) by way of the driver and with the boosting force (Fv) by way of the booster stage (2),
- the actuating force (Fb) being introduced from a piston rod (10) into the spindle (7), it being possible for the piston rod (10) to be displaced in an axially limited manner relative to the spindle (7), and a spring element (11) being connected in the force flow of the actuating force (Fb) between the piston rod (10) and the spindle (7), which spring element (11) is compressed axially in the case of the introduction of the actuating force (Fb), **characterized in that** the ball screw drive (5) has an outer pot (12) with an external toothing system (13), which outer pot (12) is set in rotation by way of the drive unit (3) via the external toothing system (13), and the ball screw nut (6) is guided in the outer pot (12) such that it is rotationally locked and can be displaced in a linear manner, by the ball screw nut (6) having a non-round outer contour which cooperates with an inner contour of the outer pot (12), which inner contour corresponds at least in regions.

2. Brake unit (1) according to Claim 1, **characterized in that** the spring element (11) is arranged in a spring element housing (14), the spring element housing (14) being mounted in the booster housing (4) such that it can be displaced in a linear manner.

3. Brake unit (1) according to Claim 2, **characterized in that** the spring element housing (14) is coupled to the spindle (7) by way of a connection which transmits force at least in the axial direction, and the piston rod (10) is mounted such that it can be displaced axially relative to the spring element housing (14).

4. Brake unit (1) according to Claim 1, **characterized in that** the booster housing (4) is configured from plastic.

5. Brake unit (1) according to Claim 1, **characterized in that** the spring element (11) has at least one cup spring.

6. Brake unit (1) according to Claim 1, **characterized in that** the spring element (11) comprises elastomer material.

7. Brake unit (1) according to Claim 1, **characterized in that** a bearing housing (15) made from metal for receiving bearing elements (16, 17) for the rotatable mounting of the outer pot (12) is arranged in the booster housing (4).

8. Brake unit (1) according to Claim 1, **characterized in that** a sensor device (18) with a stationary sensing part (19) and a linearly displaceable transmitter part (20) for the detection of the position and/or movement of the piston rod (10) is provided, the transmitter part (20) being coupled to the piston rod (10).

9. Brake unit (1) according to Claims 2 and 7, **characterized in that** a return spring (21) for resetting the spindle (7) into its unbraked starting position is clamped in between the bearing housing (15) and the spring element housing (14), the return spring (21) being prestressed axially by way of action of both the actuating force (Fb) and the boosting force (Fv).

## Revendications

1. Dispositif de freinage (1) destiné à un système de freinage hydraulique de véhicule automobile, comprenant :
- un étage d'amplificateur électromécanique (2), qui est entraîné par une unité d'entraînement électromotrice (3) et comprend un boîtier d'amplificateur (4), dans lequel est agencée une vis d'entraînement à billes (5) munie d'un écrou à billes rotatif (6) et d'une broche déplaçable linéairement (7) pour la conversion d'une force d'entraînement rotationnelle (Fa) de l'unité d'entraînement (2) en une force d'amplification translationnelle (Fv),
- un cylindre de frein principal (8) dans lequel peut coulisser linéairement un piston de cylindre (9), qui peut être sollicité aussi bien avec une force d'actionnement non amplifiée (Fb) par le conducteur, qu'avec la force d'amplification (Fv) par l'étage d'amplificateur (2),
- la force d'actionnement (Fb) étant introduite à partir d'une tige de piston (10) dans la broche (7), la tige de piston (10) pouvant coulisser axialement de manière limitée par rapport à la broche (7) et un élément ressort (11) étant raccordé dans le flux de force de la force d'actionnement (Fb) entre la tige de piston (10) et la broche (7), lequel est comprimé axialement lors de l'introduction de la force d'actionnement (Fb), **caractérisé en ce que** la vis d'entraînement à billes (5) comprend un contenant extérieur (12) muni d'une denture extérieure (13), qui est mis en rotation par l'unité d'entraînement (3) par l'intermédiaire de la denture extérieure (13), et l'écrou à billes (6) est guidé en coulissement linéaire et de manière bloquée en rotation dans le contenant extérieur (12), par le fait que l'écrou à billes (6) présente un contour extérieur non circulaire, qui coopère avec un contour intérieur, correspondant au moins en zones, du contenant extérieur (12).

2. Dispositif de freinage (1) selon la revendication 1, **caractérisé en ce que** l'élément ressort (11) est agencé dans un boîtier d'élément ressort (14), le boîtier d'élément ressort (14) étant monté en coulissement linéaire dans le boîtier d'amplificateur (4) .

3. Dispositif de freinage (1) selon la revendication 2, **caractérisé en ce que** le boîtier d'élément ressort (14) est couplé à la broche (7) par une liaison transmettant les forces au moins dans la direction axiale, et la tige de piston (10) est montée en coulissement axial par rapport au boîtier d'élément ressort (14).

4. Dispositif de freinage (1) selon la revendication 1, **caractérisé en ce que** le boîtier d'amplificateur (4) est formé en matière plastique.

5. Dispositif de freinage (1) selon la revendication 1, **caractérisé en ce que** l'élément ressort (11) comprend au moins une rondelle-ressort.

6. Dispositif de freinage (1) selon la revendication 1, **caractérisé en ce que** l'élément ressort (11) comprend un matériau élastomère.

7. Dispositif de freinage (1) selon la revendication 1, **caractérisé en ce qu'**un boîtier de palier (15) en métal pour la réception d'éléments de palier (16, 17) pour le montage rotatif du contenant extérieur (12) est agencé dans le boîtier d'amplificateur (4).

8. Dispositif de freinage (1) selon la revendication 1, **caractérisé en ce qu'**un appareil de détection (18) muni d'une partie de détection fixe (19) et d'une partie de transmission à coulissement linéairement (20) est prévue pour la détection de la position et/ou du mouvement de la tige de piston (10), la partie de transmission (20) étant couplée avec la tige de piston (10) .

9. Dispositif de freinage (1) selon les revendications 2 et 7, **caractérisé en ce qu'**un ressort de rappel (21) pour le retrait de la broche (7) dans sa position initiale non freinée est tendu entre le boîtier de palier (15) et le boîtier d'élément ressort (14), le ressort de rappel (21) étant prétendu axialement aussi bien sous l'effet de la force d'actionnement (Fb) que de la force d'amplification (Fv) .
